# FASCICULE DE BREVET EUROPEEN

(11) **EP 2 709 818 B1**
(45) Date de publication et mention de la délivrance du brevet: **22.08.2018**
(21) Numéro de dépôt: 12725076.9
(22) Date de dépôt: 30.04.2012
(51) Int. Cl.: B29C 49/18, B29C 49/54, B29C 49/12, B29K 267/00, B29C 49/06, B29C 49/48, B29C 49/78

(54) **PROCÉDÉ D'ÉTIRAGE SOUFFLAGE D'UN RÉCIPIENT, COMPRENANT UNE RÉTRACTION DE LA TIGE D'ÉTIRAGE AU COURS D'UNE OPÉRATION DE BOXAGE**
VERFAHREN ZUR STRECKBLASUNG EINES BEHÄLTERS MIT EINZUG DER STRECKSTRANGE WÄHREND EINER VERSCHACHTELUNGSOPERATION
METHOD FOR THE STRETCH-BLOWING OF A CONTAINER, COMPRISING A RETRACTION OF THE STRETCH ROD DURING A BOXING OPERATION

(30) Priorité: 19.05.2011 FR 1154354
(43) Date de publication de la demande: 26.03.2014
(73) Titulaire: Sidel Participations, 76930 Octeville Sur Mer (FR)
(72) Inventeur: DERRIEN, Mikael, F-76930 Octeville Sur Mer (FR); DEAU, Thierry, F-76930 Octeville Sur Mer (FR); PROTAIS, Pierrick, F-76930 Octeville Sur Mer (FR); SANTAIS, Franck, F-76930 Octeville Sur Mer (FR)
(74) Mandataire: Siloret, Patrick
(86) Numéro de dépôt international: PCT/FR2012/050964
(87) Numéro de publication internationale: WO 2012/156614

(56) Documents cités:
- EP-A1- 1 063 076
- EP-A1- 1 588 825
- WO-A1-99/52701
- JP-A- 6 270 235

## Description

L'invention a trait à la fabrication des récipients par étirage soufflage à partir d'ébauches en matière plastique tel que polyéthylène téréphtalate (PET).

Qu'il s'agisse d'une préforme ou d'un récipient intermédiaire ayant déjà subi une opération de préformage, une ébauche comprend un corps, généralement cylindrique de révolution, un col, qui constitue le buvant du récipient à former, et un fond qui ferme le corps à l'opposé du col.

La technique classique de fabrication consiste à introduire l'ébauche, préalablement chauffée à une température supérieure à la température de transition vitreuse de la matière (environ 80°C dans le cas du PET), dans un moule muni d'une paroi définissant une cavité à l'empreinte du récipient, et à injecter dans l'ébauche, par le col, un fluide, tel qu'un gaz (généralement de l'air), sous pression pour plaquer la matière contre la paroi du moule.

Sous l'effet de la pression, la matière ramollie par la chauffe forme une bulle qui enfle et se développe à la fois suivant une direction axiale, parallèle à l'axe principal du moule, et suivant une direction radiale, perpendiculaire à l'axe du moule.

Afin d'éviter tout désaxement du récipient et d'assurer une bonne équirépartition de la matière, l'étirage axial de l'ébauche est forcé au moyen d'une une tige déplaçable axialement dans le moule, cette tige comprenant une extrémité distale venant repousser le fond de l'ébauche jusqu'à venir le plaquer contre un fond de moule à l'empreinte du fond du récipient.

Il est connu de longue date de commander le mouvement de la tige d'étirage au moyen d'un vérin pneumatique, cf. par exemple le brevet français FR 2 662 631 (DYNAPLAST). Généralement l'alimentation pneumatique du vérin est assurée par un simple raccordement au réseau d'air comprimé à 7 bars (100 psi), la vitesse de la tige étant régulée mécaniquement au moyen d'une came.

Il a récemment été proposé de remplacer la commande pneumatique par une commande magnétique, cf. le brevet français FR 2 798 093 ou à son équivalent américain US 6 722 868, tous deux au nom de SIDEL. Cette technologie, qui a le double avantage d'économiser l'air sous pression et de limiter l'emploi de pièces d'usure (la commande magnétique est réalisée sans contact), tend à remplacer progressivement la commande pneumatique, plus ancienne et moins performante.

Ces technologies posent toutes deux des difficultés dans la fabrication de récipients à fond boxé. Dans cette application, le soufflage du récipient est réalisé dans une cavité d'un moule muni d'un fond de moule monté déplaçable en translation par rapport à l'axe principal (longitudinal) du moule. A la fin de l'étirage, le fond de moule est déplacé sur cet axe en direction de la cavité, de manière à surétirer localement la matière, conférant ainsi au fond du récipient une bonne capacité de déformation contrôlée. C'est pourquoi cette application est couramment réservée aux récipients destinés à être remplis à chaud, dénommés HR (heat résistant).

La commande de déplacement du fond de moule est généralement pneumatique. La pression requise pour déplacer le fond de moule est élevée, puisqu'il est nécessaire de vaincre la résistance due à la pression de soufflage (supérieure à 25 bars) régnant dans le récipient.

La tige d'étirage doit être maintenue appliquée contre le fond de moule lors du boxage, afin de limiter les risques de glissement (et donc de désaxement) du fond du récipient lors du mouvement du fond de moule.

La commande pneumatique de la tige d'étirage n'interdit pas le boxage, puisque la poussée exercée par le fond de moule sur lequel s'applique une pression supérieure à 25 bars est très supérieure à la résistance (négligeable, en comparaison) exercée par la tige d'élongation, dont la pression de commande n'est que de 7 bars environ. Toutefois, la cinétique du boxage, fonction de l'inertie du fond de moule et de sa vitesse de déplacement (élevée pour éviter les phénomènes de pincement de la matière entre le fond et la paroi du moule), est telle que le mouvement de retrait de la tige d'élongation sous la poussée du fond de moule peut se révéler incontrôlé. Des phénomènes de rebond de la tige peuvent apparaître, ce qui peut provoquer un marquage du fond du récipient, et favoriser un glissement de celui-ci lors de la perte de contact de la tige.

Quant à la commande magnétique de la tige d'étirage, elle rend le boxage difficile à mettre en oeuvre, car les efforts induits sur la tige par les électroaimants de commande sont très supérieurs à ceux induits par une commande pneumatique ordinaire, et les constructeurs sont confrontés, soit à l'impossibilité de réaliser le boxage en raison de la résistance de la tige, soit à un endommagement du fond du récipient par un poinçonnage entre le fond de moule et la tige d'étirage. Le document WO99/52701 A1 décrit un procédé de fabrication d'un récipient selon le préambule de la revendication 1 et un ensemble d'étirage soufflage de récipients selon le préambule de la revendication 2. L'invention vise à remédier aux inconvénients précités, en proposant une solution permettant de limiter les risques de déformation ou d'endommagement de celui-ci lors du boxage.

A cet effet, il est proposé, en premier lieu, un procédé de fabrication d'un récipient selon les caractéristiques de la revendication 1. Il est proposé, en deuxième lieu, un ensemble d'étirage soufflage de récipients selon les caractéristiques de la revendication 2. Selon un exemple qui ne fait pas partie de l'invention, la tige est montée sur un chariot mobile de manière débrayable, par exemple par l'intermédiaire d'une pièce de liaison mobile. Cette pièce de liaison peut comprendre un piston monté dans une chemise qu'elle sépare en deux chambres dont l'une au moins est raccordée à un distributeur fluidique. Le piston est de préférence déplaçable sur une course prédéterminée, égale à une course du fond de moule.

Selon un autre mode de réalisation, l'ensemble d'étirage soufflage comprend des moyens de détection de la position du fond de moule, tels qu'au moins un capteur relié à l'unité de contrôle.

Le dispositif de commande du déplacement de la tige est de préférence électromagnétique.

Il est proposé, en troisième lieu, une machine de fabrication de récipients par étirage soufflage à partir d'ébauches en matière plastique, équipée d'un ou plusieurs ensembles d'étirage soufflage tels que présentés ci-dessus.

D'autres objets et avantages de l'invention apparaîtront à la lumière de la description faite ci-après en référence aux dessins annexés dans lesquels :
- la figure 1 est une vue partielle en perspective d'un ensemble d'étirage soufflage de récipients, équipé d'une unité d'étirage représentée en position haute de la tige d'étirage, à l'instant de l'introduction d'une ébauche dans le moule ;
- la figure 2 est une vue similaire à la figure 1, montrant l'unité d'étirage en position basse de la tige d'étirage, à la fin de l'opération de présoufflage du récipient ;
- la figure 3 est une vue similaire à la figure 1, montrant l'unité d'étirage en position rétractée de la tige d'étirage, à la fin de l'opération de boxage du fond du récipient ;
- la figure 4 est une vue en coupe montrant le moule, à l'instant du début de l'opération de présoufflage ;
- la figure 5 est une vue similaire à la figure 4, à la fin de l'opération de présoufflage ;
- la figure 6 est une vue similaire à la figure 4, à la fin de l'opération de boxage ;
- la figure 7 est un diagramme illustrant les positions respectives, mesurées suivant l'axe du moule, de la tige d'étirage et du fond de moule, par rapport à une origine correspondant à la position haute du fond de moule en fin de boxage ;
- les figures 8, 9 et 10 sont des vues en coupe illustrant trois positions différentes de la tige d'étirage, selon un exemple qui ne fait pas partie de l'invention.

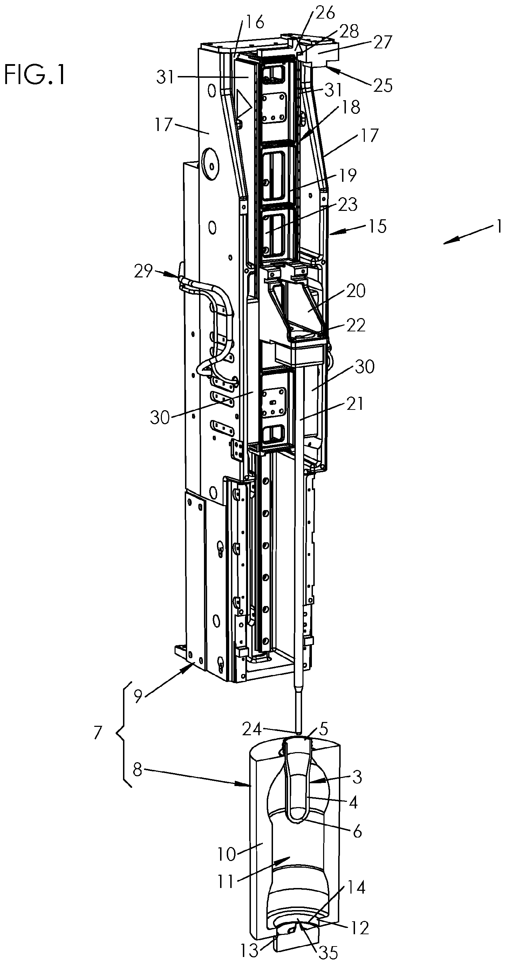

Sur les figures 1 à 3 est partiellement représentée une machine **1** de fabrication de récipients **2** par étirage soufflage d'ébauches, en l'occurrence des préformes **3,** en matière plastique (tel que PET) comprenant un corps **4** sensiblement cylindrique, un col **5** dont la forme est définitive, et un fond **6** hémisphérique qui ferme le corps **4** à l'opposé du col **5.**

En pratique, la machine **1** est équipée d'une série d'ensembles **7** individuels d'étirage soufflage, montés sur un carrousel (non représenté) entraîné en rotation autour d'un axe central. Chaque ensemble **7** d'étirage soufflage, tel celui représenté sur les figures 1 à 3, comprend un moule **8,** une unité **9** d'étirage et des moyens de soufflage, connus en soi et non représentés.

Le moule **8** est par exemple du type portefeuille et comprend deux demi-moules articulés autour d'une charnière commune et qui s'ouvrent pour permettre, successivement, l'évacuation d'un récipient **2** formé et l'introduction d'une préforme **3** à former, préalablement chauffée dans une unité de chauffe.

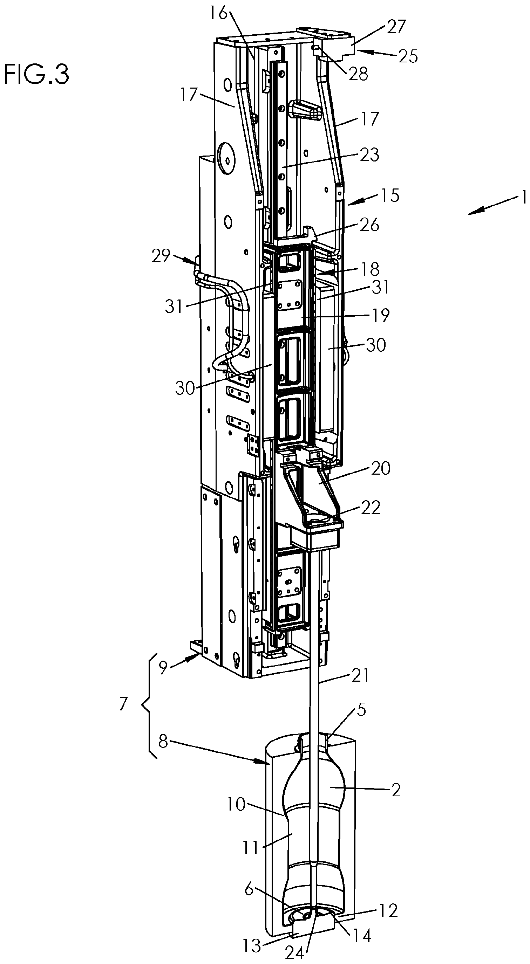

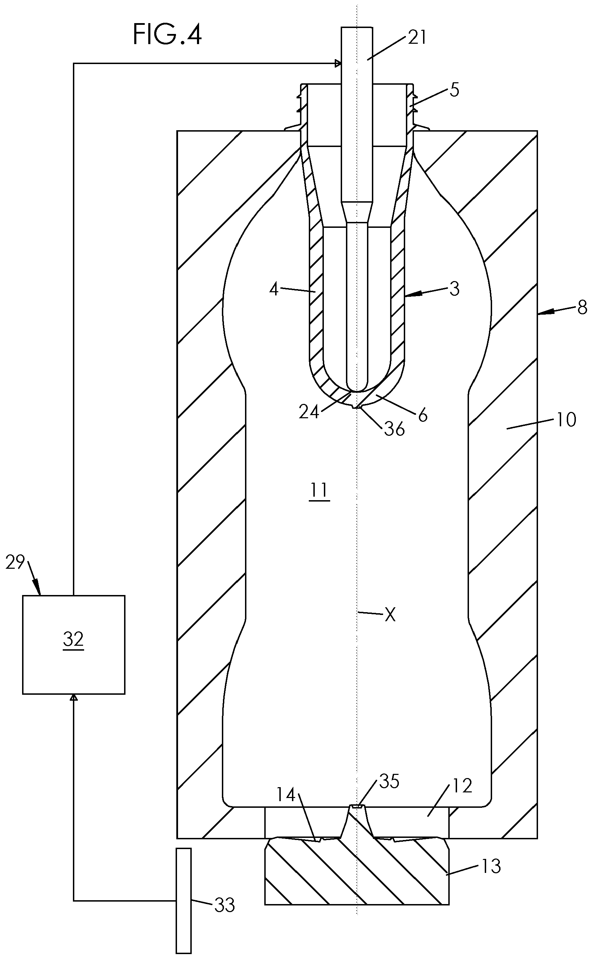

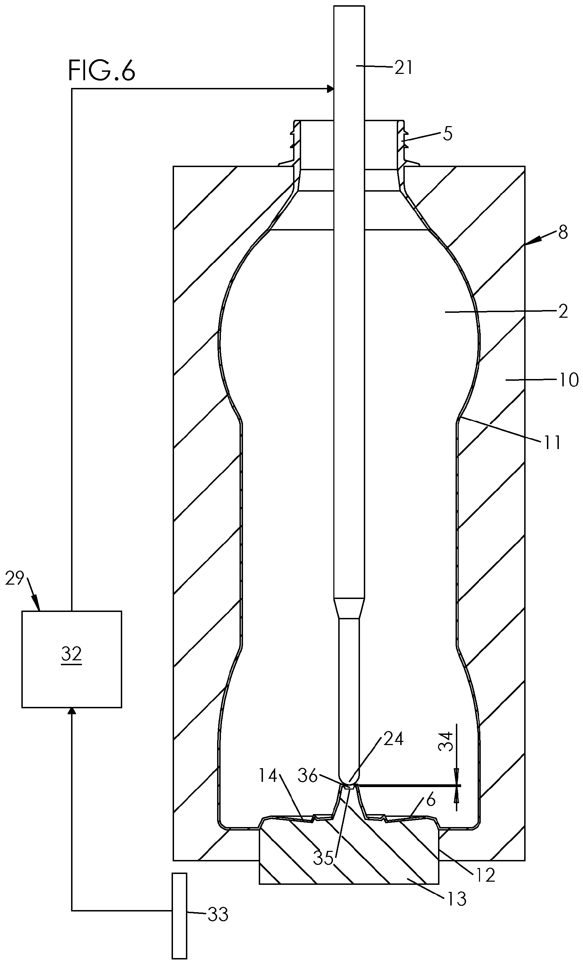

Le moule **8** (davantage visible sur les figures 4 à 6) comprend une paroi **10** définissant une cavité **11** à l'empreinte du récipient **2,** sensiblement symétrique de révolution autour d'un axe **X** longitudinal principal et présentant, dans une partie inférieure, une ouverture **12** définissant un passage pour un fond **13** de moule monté déplaçable axialement par rapport à l'axe **X** et donc à la paroi **10** entre :
- une position sortie (figures 1 et 4), dans laquelle le fond **13** de moule est écarté de l'ouverture **12,**
- et une position rentrée (figures 3 et 6), dans laquelle le fond **13** de moule obture l'ouverture **12.**

La mobilité du fond **13** de moule permet de procéder à un surétirage du fond du récipient **2,** au cours d'une opération appelée « boxage ». Le déplacement du fond **13** de moule est par exemple assuré par un vérin double-effet alimenté en gaz sous pression.

Dans la configuration illustrée sur les figures - donnée à titre d'exemple - où les récipients **2** sont orientés col en haut, la position sortie du fond **13** de moule correspond à une position basse, et sa position rentrée à une position haute.

Le fond **13** de moule présente une surface **14** supérieure qui, en position haute du fond **13,** ferme la cavité **11** en obturant l'ouverture **12,** complétant ainsi l'empreinte contre laquelle est appliquée la matière lors du soufflage du récipient **2.**

L'unité **9** d'étirage comprend un bâti **15,** fixé au carrousel de la machine **1,** qui s'étend verticalement sensiblement à l'aplomb du moule **8.** Le bâti **15** présente en section transversale un profil en U et comprend une paroi **16** de fond bordée de deux parois **17** latérales.

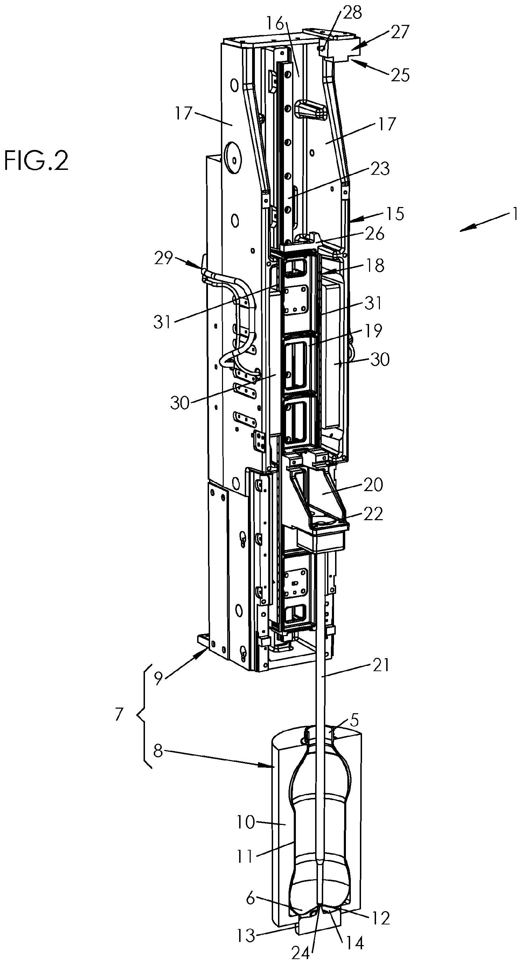

L'unité **9** d'étirage comprend un équipage **18** mobile incluant un chariot **19** muni d'une potence **20** en saillie sur laquelle est fixée une tige **21** d'étirage par une extrémité **22** supérieure. Le chariot **19** est monté coulissant sur un rail **23** fixé à la paroi **16** de fond du bâti **15,** entre :
- une position haute (figure 1) dans laquelle la tige **21** est complètement sortie du moule **8,** une extrémité **24** inférieure libre de la tige **21** se trouvant à une distance du moule **8** supérieure à la hauteur du col **5,** de manière à permettre l'évacuation d'un récipient **2** formé et l'introduction d'une préforme **3** à souffler ;
- une position basse (figure 2), dans laquelle la tige **21** d'étirage est reçue dans le moule **8** en venant au voisinage immédiat du fond **13** de moule (lequel est alors en position sortie), avec la matière du récipient **2** localement prise en sandwich entre la tige **21** et le fond **13** de moule.

L'unité **9** d'étirage est munie d'un dispositif **25** de verrouillage du chariot **19** en position haute, qui comprend un crochet **26** fixé en partie supérieure du chariot **19,** et un verrou **27** fixé à l'une des parois **17** latérales du bâti **15,** le verrou **27** étant muni d'une targette **28** mobile sur laquelle vient s'encliqueter le crochet **26** en position haute (figure 1) du chariot **19.**

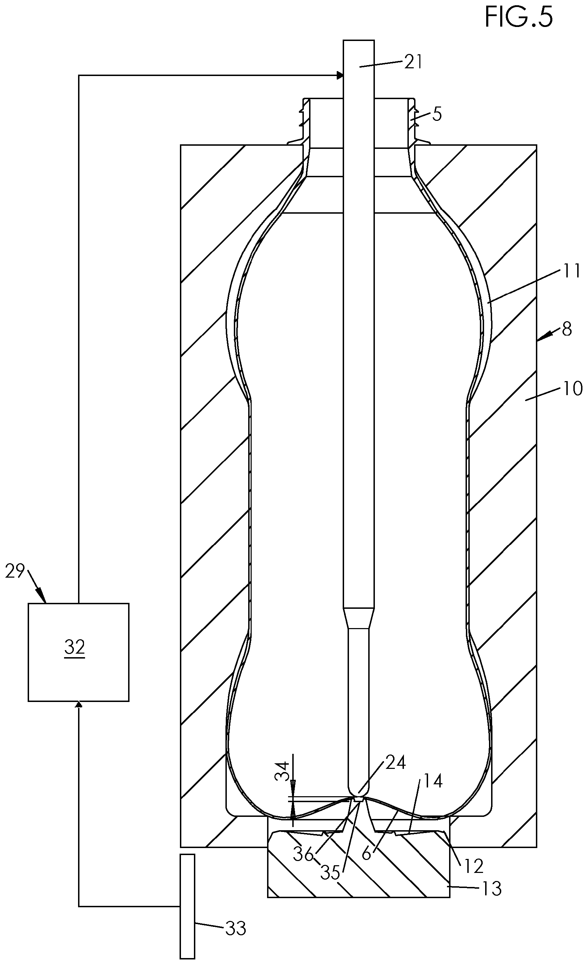

L'unité **9** d'étirage est en outre équipée d'un dispositif **29** de commande électromagnétique du déplacement du chariot **19.** Le dispositif **29** de commande comprend :
- sur le bâti **15,** une paire d'électroaimants **30** (également appelés moteurs électromagnétiques ou plus simplement moteurs) fixés chacun sur une paroi **17** latérale du bâti **15** ;
- sur le chariot **19,** une paire de pistes **31** magnétiques formées chacune d'une série d'aimants permanents à polarité alternée, placées en regard et à faible distance de chacun des moteurs **30** ;
- une unité **32** de contrôle (illustrée schématiquement sur la figure 5), reliée électriquement aux moteurs **30,** et programmée pour leur délivrer un signal électrique de commande.

Selon un premier mode de réalisation illustré sur la figure 5, la position du chariot **19** est momentanément asservie à la position du fond **13** de moule. La consigne de position du fond **13** de moule est par exemple délivrée par des moyens de détection, tels qu'au moins un capteur **33,** apte à déterminer la position linéaire du fond **13** de moule suivant l'axe **X** du moule **8.**

Les moyens de détection (en l'espèce le capteur **33**) sont par exemple du type magnétique, et ils peuvent dans ce cas être placés en regard d'une piste magnétique fixée sur le fond **13** de moule. En variante, il peut s'agir d'un ou de plusieurs capteurs capacitifs munis d'une pluralité d'éléments sensibles détectant successivement la présence d'une partie du moule **8.**

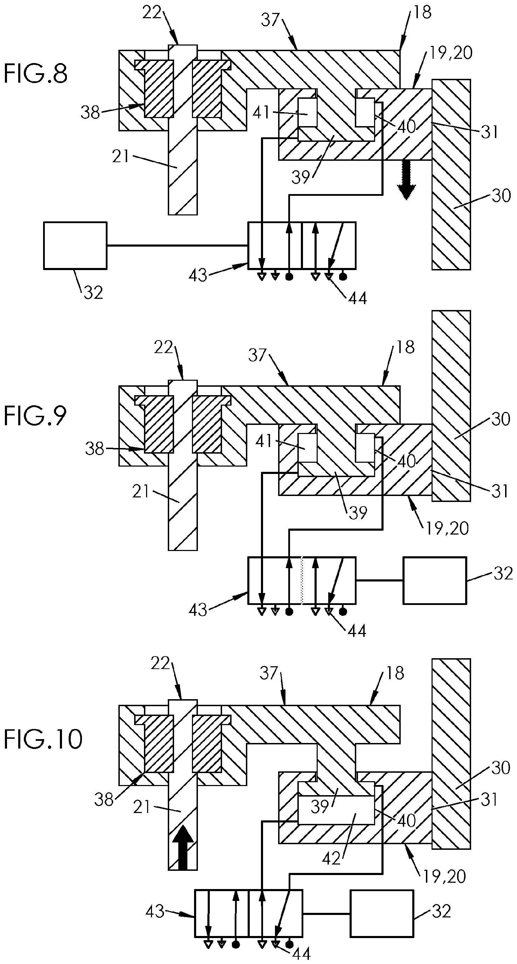

Selon un exemple, illustré sur les figures 8, 9 et 10, la tige **21** est débrayable, l'unité **32** de contrôle étant programmée pour commander une libération momentanée de la tige **21** lui autorisant un libre mouvement axial sur une course prédéterminée.

La fabrication d'un récipient **2** à fond boxé est réalisée comme suit.

Une première phase consiste à introduire dans le moule **8** la préforme **3,** préalablement chauffée à une température supérieure à la température de transition vitreuse de la matière (environ **80**°C dans le cas du PET). Une fois la préforme **3** en position et le moule **8** refermé, le dispositif **29** de commande provoque le déverrouillage puis le déplacement du chariot **19** (et donc de la tige **21** d'étirage) depuis la position haute vers une position de départ dans laquelle l'extrémité **24** libre de la tige **21** vient au contact du fond **6** de la préforme **3** (figure 4).

Une deuxième phase, dite d'étirage soufflage, consiste à injecter dans la préforme **3** un fluide (normalement de l'air) à une pression moyenne dite de présoufflage, comprise entre 5 bars et 15 bars, tout en déplaçant la tige **21** d'étirage depuis sa position de départ vers sa position basse, le fond **13** de moule étant maintenu dans sa position sortie (basse). Lors de cette phase, la vitesse de déplacement de la tige **21** d'étirage est réglée de sorte à maintenir le contact entre l'extrémité **24** libre de la tige **21** et le fond **6** de la préforme **3.**

A la fin de cette phase d'étirage soufflage (figures 2 et 5) :
- le récipient n'est pas complètement formé, plusieurs zones n'étant toujours pas au contact de la paroi **10** en raison de l'insuffisance de la pression ;
- la tige **21** d'étirage, dans sa position basse, vient plaquer localement le fond **6** de la préforme en cours de formage contre le fond **13** de moule. En d'autres termes, le fond **6** est pris en sandwich entre l'extrémité **24** libre de la tige **21** d'étirage et la surface **14** supérieure du fond **13** de moule.

Plus précisément, la position basse de la tige **21** d'étirage est réglée de manière qu'un interstice **34** soit ménagé entre l'extrémité **24** libre de la tige **21** et la surface **14** supérieure du fond **13** de moule. La valeur de cet interstice **34,** prédéterminée, est inférieure ou égale à l'épaisseur locale de matière au centre du fond **6.** En pratique, l'interstice **34** est de préférence compris entre 0,2 et 1 mm (et par exemple de 0,5 mm environ).

Comme cela est bien visible sur les dessins, et notamment sur les figures 5 et 6, le fond **13** de moule présente en son centre une réserve **35** en creux dans laquelle est reçue, à la fin de l'étirage, une pastille **36** résiduelle de moulage de la préforme **3.** La tige **21** d'étirage maintient la pastille **36** dans la réserve **35** et assure ainsi le blocage transversal du fond **6,** évitant son glissement lors de la troisième phase du processus, dite de boxage.

La phase de boxage consiste à déplacer le fond **13** de moule, initialement en position sortie, vers sa position rentrée, et à compléter la formation par soufflage du récipient **2** en injectant dans la préforme **3,** pendant la remontée du fond **13** de moule, un fluide (de l'air) à une pression élevée (dite de soufflage, supérieure à 25 bars). La pression de soufflage est maintenue pendant une durée prédéterminée - appelée période de stabilisation - après que le fond **13** de moule a atteint sa position haute. La pression de soufflage plaque intimement la matière contre la paroi **10** du moule **8** et la surface **14** supérieure du fond **13** de moule, conformant ainsi le récipient **2** à l'empreinte de la cavité **11.**

La phase de boxage comprend une opération de rétraction qui consiste, pendant le déplacement du fond **13** de moule vers sa position rentrée (en d'autres termes pendant la remontée du fond **13** de moule vers sa position haute), selon l'invention, à déplacer la tige **21** d'étirage en synchronisme (ou en asservissement) avec le fond **13** de moule, en maintenant constant l'interstice **34** entre l'extrémité **24** libre de la tige **21** et la surface **14** supérieure du fond **13** de moule. De la sorte, la tige **21** accompagne de manière solidaire le déplacement du fond **13** de moule. Dans ce cas le déplacement de la tige **21** n'est pas passif (c'est-à-dire que la tige **21** n'est pas repoussée par le fond **13** lors de sa remontée) mais actif : ce déplacement est piloté par le dispositif **29** de commande électromagnétique, qui délivre aux moteurs **30** un signal de commande de remontée du chariot **19,** c'est-à-dire de déplacement de celui-ci en direction de sa position haute.

La commande électrique délivrée par le dispositif **29** de commande est asservie suivant au moins une consigne de position du fond **13** de moule, délivrée par le capteur **33.**

Il est envisageable, selon un exemple qui ne fait pas partie de l'invention, d'asservir également la commande électrique de déplacement du chariot **19** à la vitesse de déplacement du fond **13** de moule au cours du boxage, afin de tenir compte de la dynamique du boxage et éviter d'éventuels à-coups dans le mouvement de la tige **21,** qui pourraient provoquer un endommagement de la matière (encore molle) du fond **6.** Sur les figures 8 à **10**, la tige **21** est débrayable en étant couplée à la potence **20** du chariot **19** par l'intermédiaire d'une pièce **37** de liaison mobile formant vérin.

A une extrémité avant, la pièce **37** de liaison inclut une bride **38** pour la fixation rigide de la tige **21** à son extrémité **22** supérieure. A une extrémité arrière, la pièce **37** de liaison comprend (ou est de préférence conformée en) un piston **39** reçu dans une chemise 40 formée dans la potence **20.**

Le piston **39** sépare la chemise **40** en une chambre **41** supérieure et une chambre **42** inférieure. Selon un exemple préféré de réalisation, illustré sur les figures 8, 9 et 10, le vérin ainsi formé par la pièce **37** de liaison est du type simple effet, les chambres **41** et **42** étant raccordées à un distributeur **43** fluidique à cinq voies et deux positions :
- une position de charge (figures 8 et 9) dans laquelle la chambre **41** supérieure est reliée à une source de pression fluidique (de préférence hydraulique pour bénéficier de pressions élevées) et la chambre **42** inférieure est reliée à l'air libre ;
- une position d'échappement (figure 10) dans laquelle la chambre **41** supérieure est mise en communication avec un échappement **44** et la chambre **42** inférieure est toujours reliée à l'air libre.

Le distributeur **43** est piloté par l'unité **32** de contrôle.

Le piston **39** et la chemise **40** sont dimensionnés de manière que la course du piston **39** soit égale à la course du fond **13** de moule lors de l'opération de boxage.

Dans une variante de l'exemple, la chambre **42** inférieure est simplement raccordée en permanence à l'air libre par un perçage réalisé dans la potence **20**, tandis que la chambre **41** supérieure est raccordée à un distributeur à trois voies et deux positions : une position de charge dans laquelle la chambre **41** supérieure est en communication avec la source de pression fluidique, et une position d'échappement dans laquelle la chambre **41** supérieure est mise en communication avec un échappement.

Dans une autre variante de l'exemple, la tige demeure solidaire du chariot 19, mais c'est l'accouplement de celui-ci aux moteurs **30** qui est débrayable, la libération du chariot **19** (et donc de la tige **21**) étant pilotée par l'unité **32** de contrôle.

Dans ce cas, l'unité **32** de contrôle, qui est normalement programmée pour appliquer au chariot **19,** via les moteurs **30,** une force électromotrice dirigée vers le bas (pendant la descente de la tige **21**) ou vers le haut (pendant la remontée de la tige **21**) est également programmée pour modifier, par exemple en l'annulant momentanément, pendant la durée de l'opération de boxage, la consigne de force électromotrice appliquée la tige **21,** afin de libérer celle-ci et permettre la remontée du fond **13** de moule sans résistance.

Par ailleurs, afin d'éviter (ou de limiter) un éventuel rebond de la tige **21** à la fin du boxage, lorsque le fond **13** de moule atteint sa position haute, il est possible de programmer dans l'unité **32** de contrôle une butée électromagnétique pour la tige **21.** Cette butée peut être réalisée par programmation d'une remontée de la tige **21** pendant le boxage, sur une course égale (ou légèrement supérieure, pour conserver une marge de sécurité) à celle du fond **13** de moule. Compte tenu de l'annulation simultanée de la force électromotrice, la tige **21** reste libre pendant le boxage, mais elle ne peut remonter au-delà de sa fin de course programmée.

Quel que soit le mode de réalisation retenu de l'exemple, le fonctionnement est le suivant. Lors de la phase d'étirage soufflage, le distributeur **43** est en position de charge, la position de la tige **21,** dépourvue de tout débattement axial, étant déterminée par l'unité **32** de contrôle qui assure le déplacement du chariot **19** (dans le sens de la flèche sur la figure 8). Cette configuration est maintenue tant que la tige **21** n'a pas atteint sa position basse.

Au lancement de l'opération de boxage, le déplacement du fond **13** de moule et la libération de la tige **21** sont commandés simultanément par l'unité **32** de contrôle. La tige **21** n'oppose alors aucune résistance (autre que son propre poids) à la remontée du fond **13** de moule, tant que celui-ci n'a pas atteint sa position haute. La remontée de la tige **21** pendant le boxage (suivant le sens de la flèche sur la figure 10) est donc passive, la tige **21** étant simplement repoussée par le fond **13** de moule sur une distance égale à sa course.

Une quatrième phase, dite de dégazage, consiste, à l'issue de la période de stabilisation, à mettre à l'air libre le récipient **2** ainsi formé. La pression chute alors jusqu'à atteindre asymptotiquement la pression atmosphérique. Puis le fond **13** de moule est déplacé vers sa position basse, le chariot **19** (avec la tige **21**) est remonté en position haute, le moule **8** est ouvert et le récipient **2** formé est évacué pour permettre la répétition du cycle.

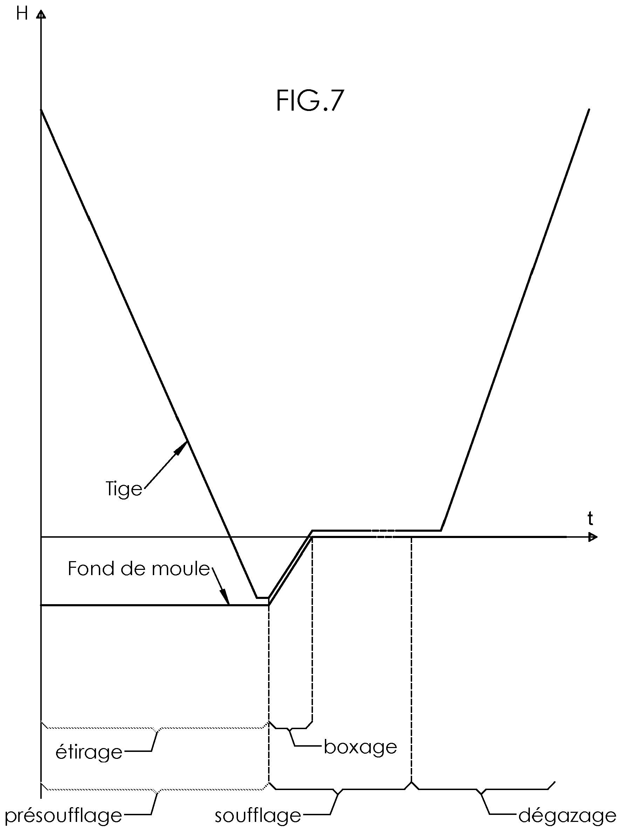

On a tracé sur le diagramme de la figure 7 les positions axiales (ou hauteurs) respectives de l'extrémité **24** libre de la tige **21** d'étirage et du centre du fond **13** de moule, en affectant arbitrairement la valeur nulle à la hauteur du centre du fond **13** dans sa position rentrée (haute).

On voit que, dans la phase d'étirage, le fond **13** conserve sa position sortie (basse) tandis que la tige **21** descend depuis la position haute vers la position basse, celle-ci étant atteinte lorsque la tige **21** atteint la hauteur du centre du fond **13,** augmentée de l'interstice **34.**

Lors de la phase de boxage, le fond **13** et la tige **21** sont simultanément remontés vers leurs positions hautes respectives, l'interstice **34** entre eux demeurant constant. On voit qu'après que le fond **13** et la tige ont tous deux atteint leurs positions hautes, ils sont maintenus temporairement dans cette position pendant au moins la période de stabilisation. Puis survient le dégazage, suivi de la remontée de la tige **21.**

Il est préférable de commander la remontée du chariot **19** avant de remettre le distributeur **43** en position de charge, afin d'éviter que la tige **21** ne soit brutalement poussée vers le bas et n'endommage ainsi le fond du récipient **2.** La remise du distributeur **43** en position de charge peut être commandée pendant la remontée de la tige **21,** lorsque la distance séparant celle-ci du fond du récipient **2** est suffisante.

L'ensemble **7** d'étirage soufflage et son procédé de fonctionnement qui viennent d'être décrits procurent les avantages suivants :
- le déplacement du fond **13** de moule n'est ni empêché, ni même freiné par la présence de la tige **21** d'étirage, qui se retire et libère la place au fond **13** de moule au fur et à mesure de la remontée de celui-ci ;
- le fond **6** du récipient **2** est maintenu centré par rapport au fond **13** de moule lors du boxage, sans possibilité de glissement, avec un effort de maintien sensiblement constant résultant du déplacement simultané de la tige **21** et du fond **13** ;
- le fond **6** du récipient **2** n'est pas endommagé en son centre lors du boxage, la tige 21 n'exerçant aucun effort sur le fond **6** lors du boxage, ce qui évite un poinçonnage de la matière.

## Revendications

1. Procédé de fabrication d'un récipient (**2**) à partir d'une ébauche (**3**) en matière plastique, dans un ensemble (**7**) d'étirage soufflage équipé :
- d'un moule (**8**) muni d'une paroi (**10**) définissant une cavité (**11**) à l'empreinte du récipient (**2**), s'étendant selon un axe (**X**) principal du moule (**8**) et d'un fond (**13**) de moule déplaçable axialement par rapport à la paroi (**10**) entre une position sortie et une position rentrée,
- d'une unité (**9**) d'étirage comprenant une tige (**21**) d'étirage déplaçable axialement par rapport à la paroi (**10**) et un dispositif (**29**) de commande du déplacement de la tige (**21**) d'étirage,
ce procédé comprenant :
- une phase d'introduction de l'ébauche (**3**) dans le moule (**8**) ;
- une phase d'étirage soufflage, lors de laquelle un fluide sous pression est injecté dans l'ébauche (**3**) et la tige (**21**) d'étirage est déplacée en direction du fond (**13**) de moule, jusqu'à venir plaquer localement l'ébauche (**3**) contre le fond (**13**) de moule ;
- une phase de boxage, lors de laquelle le fond (**13**) de moule, initialement en position sortie, est déplacé vers sa position rentrée ; procédé tel qu'il comprend une opération de rétraction, consistant, au cours de la phase de boxage, à un déplacement de la tige (**21**) d'étirage en synchronisme avec le déplacement du fond (**13**) de moule, procédé **caractérisé en ce que** la commande de déplacement de la tige (**21**) d'étirage est asservie au déplacement du fond (**13**) de moule, en maintenant constant l'interstice (**34**) entre l'extrémité (24) libre de la tige (21) et la surface (14) supérieure du fond (13) de moule.

2. Ensemble (**7**) d'étirage soufflage d'un récipient (**2**) à partir d'une ébauche (**3**) en matière plastique, qui comprend :
- un moule (**8**) muni d'une paroi (**10**) définissant une cavité (**11**) à l'empreinte du récipient (**2**), s'étendant selon un axe (**X**) principal,
- un fond (**13**) de moule déplaçable axialement par rapport à la paroi (**10**) entre une position sortie et une position rentrée,
- une unité (**9**) d'étirage, avec une tige (**21**) d'étirage déplaçable axialement par rapport à la paroi (**10**) et un dispositif (**29**) de commande du déplacement de la tige (**21**) d'étirage, tel que le dispositif (**29**) de commande comprend une unité (**32**) de contrôle programmée pour, lors d'une phase de boxage, consistant à déplacer le fond (**13**) de moule depuis sa position sortie vers sa position rentrée, commander un déplacement de la tige (**21**) d'étirage en synchronisme avec le déplacement du fond (**13**) de moule, **caractérisé en ce que** la commande de déplacement de la tige (**21**) d'étirage est asservie au déplacement du fond (**13**) de moule, en maintenant constant l'interstice (34) entre l'extrémité)24) libre de la tige (21) et la surface (14) supérieure du fond (13) de moule.

3. Ensemble (7) d'étirage soufflage selon la revendication 2 , **caractérisé en ce que** le dispositif (**29**) de commande du déplacement de la tige (**21**) d'étirage est électromagnétique.

4. Ensemble (**7**) d'étirage soufflage selon l'une des revendications 2 à 3 **caractérisé en ce qu'**il comprend des moyens de détection/surveillance de la position du fond (**13**) de moule, tels qu'au moins un capteur (**33**) relié à l'unité (**32**) de contrôle.

5. Machine (**1**) de fabrication de récipients par étirage soufflage à partir d'ébauches (**3**) en matière plastique, équipée d'un ou plusieurs ensembles (**7**) d'étirage soufflage selon l'une des revendications 2 à 4.

## Patentansprüche

1. Verfahren zur Herstellung eines Behälters (2) ausgehend von einem Rohling (3) aus Kunststoff, in einer Streckblaseinheit (7), die ausgestattet ist mit:
- einem Formwerkzeug (8), das mit einer Wand (10), die einen Hohlraum (11) mit dem Abdruck des Behälters (2) definiert, der sich gemäß einer Hauptachse (X) des Formwerkzeugs (8) erstreckt, und mit einem Formwerkzeugboden (13) versehen ist, der axial bezüglich der Wand (10) zwischen einer ausgetretenen Stellung und einer eingezogenen Stellung verschiebbar ist,
- einer Streckeinheit (9), die eine Streckstange (21), die axial bezüglich der Wand (10) verschiebbar ist, und eine Vorrichtung (29) zum Steuern der Verschiebung der Streckstange (21) enthält,
wobei dieses Verfahren enthält:
- eine Phase des Einführens des Rohlings (3) in das Formwerkzeug (8),
- eine Phase des Streckblasens, bei der ein unter Druck stehendes Fluid in den Rohling (3) eingespritzt und die Streckstange (21) in Richtung des Bodens (13) des Formwerkzeugs verschoben wird, bis sie den Rohling (3) lokal gegen den Formwerkzeugboden (13) drückt;
- eine Phase des Treibens, bei der der Boden (13) des Formwerkzeugs, der ursprünglich in der ausgetretenen Stellung ist, in seine eingezogene Stellung verschoben wird;
Verfahren, das derart ist, dass es einen Einziehvorgang enthält, der während der Treibphase darin besteht, eine Verschiebung der Streckstange (21) synchron mit der Verschiebung des Bodens (13) des Formwerkzeugs zu steuern, wobei das Verfahren **dadurch gekennzeichnet ist, dass** die Verschiebesteuerung der Streckstange (21) von der Verschiebung des Bodens (13) des Formwerkzeugs abhängig ist, indem der Zwischenraum (34) zwischen dem freien Ende (24) der Stange (21) und der Oberfläche (14) des Bodens (13) des Formwerkzeugs konstant gehalten wird.

2. Streckblaseinheit (7) eines Behälters (2) ausgehend von einem Rohling (3) aus Kunststoff, die enthält:
- ein Formwerkzeug (8), das mit einer Wand (10) versehen ist, die einen Hohlraum (11) mit dem Abdruck des Behälters (2) definiert, der sich gemäß einer Hauptachse (X) erstreckt,
- einen Formwerkzeugboden (13), der axial bezüglich der Wand (10) zwischen einer ausgetretenen Stellung und einer eingezogenen Stellung verschiebbar ist,
- eine Streckeinheit (9) mit einer Streckstange (21), die axial bezüglich der Wand (10) verschiebbar ist, und einer Vorrichtung (29) zum Steuern der Verschiebung der Streckstange (21), derart, dass die Steuervorrichtung (29) eine Kontrolleinheit (32) enthält, die so programmiert ist, dass sie in einer Treibphase, die darin besteht, den Boden (13) des Formwerkzeugs von seiner ausgetretenen Stellung in seine eingezogene Stellung zu verschieben, eine Verschiebung der Streckstange (21) synchron mit der Verschiebung des Bodens (13) des Formwerkzeugs steuert,
**dadurch gekennzeichnet, dass** die Steuerung der Verschiebung der Streckstange (21) von der Verschiebung des Bodens (13) des Formwerkzeugs abhängt, indem der Zwischenraum (34) zwischen dem freien Ende (24) der Stange (21) und der Oberfläche (14) des Bodens (13) des Formwerkzeugs konstant gehalten wird.

3. Streckblaseinheit (7) nach Anspruch 2, **dadurch gekennzeichnet, dass** die Steuervorrichtung (29) der Verschiebung der Streckstange (21) elektromagnetisch ist.

4. Streckblaseinheit (7) nach einem der Ansprüche 2 bis 3, **dadurch gekennzeichnet, dass** sie Einrichtungen zur Erfassung/Überwachung der Stellung des Bodens (13) des Formwerkzeugs enthält, wie mindestens einen Sensor (33), der mit der Kontrolleinheit (32) verbunden ist.

5. Maschine (1) zur Herstellung von Behältern durch Streckblasen ausgehend von Rohlingen (3) aus Kunststoff, die mit einer oder mehreren Streckblaseinheiten (7) nach einem der Ansprüche 2 bis 4 ausgestattet ist.

## Claims

1. Method for manufacturing a container (2) from a preform (3) made of plastic material, in a stretch-blow-moulding assembly (7) equipped with:
- a mould (8) provided with a wall (10) that defines a cavity (11) having the shape of the container (2), extending along a main axis (X) of the mould (8), and with a mould bottom (13) that is axially displaceable with respect to the wall (10) between an outward position and an inward position,
- a stretching unit (9) comprising a stretch rod (21) which can be displaced axially with respect to the wall (10) and a device (29) for controlling the displacement of the stretch rod (21),
this method comprising:
- a phase of introducing the preform (3) into the mould (8);
- a stretch-blow-moulding phase in which a pressurized fluid is injected into the preform (3) and the stretch rod (21) is displaced in the direction of the mould bottom (13) until it locally clamps the preform (3) against the mould bottom (13) ;
- a boxing phase in which the mould bottom (13), initially in the outward position, is moved towards its inward position;
the method being such that it comprises a retraction operation, consisting, during the boxing phase, in controlling a displacement of the stretch rod (21) in synchrony with the displacement of the mould bottom (13),
the method being **characterized in that** the control of the displacement of the stretch rod (21) is slaved to the displacement of the mould bottom (13), maintaining a constant gap (34) between the free end (24) of the rod (21) and the upper surface (14) of the mould bottom (13).

2. Assembly (7) for stretch-blow-moulding a container (2) starting from a preform (3) made of plastic material, which comprises:
- a mould (8) provided with a wall (10) that defines a cavity (11) having the shape of the container (2), extending along a main axis (X),
- a mould bottom (13) that is axially displaceable with respect to the wall (10) between an outward position and an inward position,
- a stretching unit (9) comprising a stretch rod (21) which can be displaced axially with respect to the wall (10) and a device (29) for controlling the displacement of the stretch rod (21),
such that the control device (29) comprises a control unit (32) which is programmed to, during a boxing phase, consisting in moving the mould bottom (13) from its outward position to its inward position, control a displacement of the stretch rod (21) in synchrony with the displacement of the mould bottom (13),
**characterized in that** the control of the displacement of the stretch rod (21) is slaved to the displacement of the mould bottom (13), maintaining a constant gap (34) between the free end (24) of the rod (21) and the upper surface (14) of the mould bottom (13).

3. Stretch-blow-moulding assembly (7) according to Claim 2, **characterized in that** the device (29) for controlling the displacement of the stretch rod (21) is electromagnetic.

4. Stretch-blow-moulding assembly (7) according to one of Claims 2 to 3, **characterized in that** it comprises means for detecting/monitoring the position of the mould bottom (13), such as at least one sensor (33) connected to the control unit (32).

5. Machine (1) for manufacturing containers by stretch-blow-moulding starting from preforms (3) made of plastic material, equipped with one or more stretch-blow-moulding assemblies (7) according to one of Claims 2 to 4.
